# EUROPÄISCHE PATENTANMELDUNG

(11) **EP 2 360 217 A1**
(43) Veröffentlichungstag der Anmeldung: **24.08.2011**
(21) Anmeldenummer: 11154191.8
(22) Anmeldetag: 11.02.2011
(51) Int. Cl.: C09G 3/00, A63C 5/056, C10M 169/04

(54) **Pulverförmige Gleitmittel für Wintersportgeräte**

(30) Priorität: 11.02.2010 DE 102010001861
(71) Anmelder: Holmenkol AG, 71254 Ditzingen-Heimerdingen (DE)
(72) Erfinder: Schütz, Markus, 70565, Stuttgart (DE); Bender, Holger, 70806 Kornwestheim (DE)
(74) Vertreter: Schenk, Angelika

(57) **Zusammenfassung**

Die Erfindung bezieht sich auf ein Gleitmittel für Wintersportgeräte in Pulverform, das mindestens eine pulverförmige Wachskomponente und mindestens ein Fließmittel enthält, wobei die pulverförmige Wachskomponente unter einer oder mehreren Komponenten auf Kohlenwasserstoff-Basis und/oder einem oder mehreren Fluorpolymeren ausgewählt ist.

## Beschreibung

Die vorliegende Erfindung bezieht sich auf Gleitmittel für Wintersportgeräte und insbesondere Ski, die in Pulverform vorliegen und Verbindungen auf Kohlenwasserstoffbasis und Fluorpolymere in Kombination mit einem Fließmittel enthalten. Die vorliegende Erfindung bezieht sich auch auf eine Vorrichtung mit mehreren Abteilungen, die getrennt voneinander Verbindungen auf Kohlenwasserstoffbasis, Fluorpolymere und Fließmittel enthalten. Ein weiterer Gegenstand der Erfindung ist ein Verfahren zur Beschichtung eines Wintersportgerätes mit dem pulverförmigen Gleitmittel sowie die Verwendung dieses pulverförmigen Gleitmittels zur Verbesserung der Gleiteigenschaften von Wintersportgeräten.

Nicht nur im Profisport, sondern auch bei ambitionierten Amateuren gibt es ein beständiges Bedürfnis nach Gleitmitteln, die die Gleiteffekte von Wintersportgeräten, wie beispielsweise Ski noch verbessern können, indem sie die Gleitreibung verringern und so beispielsweise zu noch höheren Spitzengeschwindigkeiten und einer noch besseren Beschleunigung führen. Bei besseren Gleiteigenschaften sind außerdem Sportgeräte wie Ski leichter zu kontrollieren.

Um eine möglichst hohe Gleitfähigkeit zu erreichen, werden die Gleitflächen mit Verbindungen oder Zusammensetzungen behandelt, die die Reibung mit dem jeweils angrenzenden Medium, wie Schnee, Eis und Wasser vermindern können.

Gewöhnlich liegen die Mittel zur Verbesserung der Gleiteigenschaften von Wintersportgeräten, die auch als Skiwachse bezeichnet werden, in Form von Blöcken vor, die Gemische von Wachsen, im Allgemeinen Paraffinwachsen, enthalten und auf die Gleitfläche aufgebracht und anschließend gegebenenfalls thermisch und/oder mechanisch nachbehandelt werden.

Derartige Gleitmittel, die auch als Basiswachse bezeichnet werden, sind im Stand der Technik in einer Vielzahl von Dokumenten beschrieben worden.

Als Beispiel kann die Druckschrift EP 1 068 274 genannt werden, in der Gleitmittel für Skier angegeben werden, die das Octadecan gegebenenfalls im Gemisch mit einem weiteren längerkettigen Alkan enthalten.

In jüngerer Vergangenheit wurden für die Verbesserung der Gleitfähigkeit von Wintersportgeräten vermehrt Fluorverbindungen eingesetzt. Diese Fluorverbindungen werden gewöhnlich entweder im Gemisch mit den Basiswachsen verwendet und entsprechend wie oben in Form von Blöcken auf die Gleitfläche aufgerieben oder unter Wärmezufuhr beispielsweise mit einem Wachsbügeleisen aufgebügelt, oder in reiner Form als Pulver oder gelöst in einem Lösungsmittel als Spray oder Fluid direkt auf die Gleitfläche oder auf eine mit einem Basiswachs vorbehandelte Gleitfläche aufgebracht.

Fluorwachse sind speziell für nasse und Neuschneeverhältnisse geeignet, da sie die Saugeffekte zwischen Gleitfläche und Schnee wirksam reduzieren können und überschüssiges Wasser, das sich durch die Reibung zwischen Schneeoberfläche und Gleitfläche bildet, schneller ableiten können. In den derzeit im Handel erhältlichen Produkten liegen die Fluorwachse meistens als Pulver vor, jedoch nicht im Gemisch mit herkömmlichen Basiswachsen wie Paraffinen, da ein Nachteil der Fluorwachse darin besteht, dass sie mit den herkömmlichen Basiswachsen nicht kompatibel sind und keine homogenen Mischungen gebildet werden können.

Der vorliegenden Erfindung liegt die Aufgabe zugrunde, die Gleiteigenschaften von Wintersportgeräten noch weiter zu verbessern.

Gemäß einer Ausführungsform enthält ein pulverförmiges Gleitmittel für Wintersportgeräte (1) mindestens eine pulverförmige Wachskomponente, die unter (1a) einer oder mehreren Komponenten auf Kohlenwasserstoff-Basis und/oder (1b) einem oder mehreren Fluorpolymeren ausgewählt ist, und (2) mindestens ein Fließmittel.

Die Anmelderin hat überraschend festgestellt, dass es durch die Gegenwart eines Fließmittel in einem pulverförmigen Gleitmittel für Wintersportgeräte möglich ist, die Gleiteigenschaften von Wintersportgeräten, wie Skiern, noch weiter zu verbessern.

Bei weiteren Ausführungsformen sind in dem Gleitmittel mindestens 2 pulverförmige Wachskomponenten enthalten. Durch die Kombination von mehreren Wachskomponenten in Pulverform ist es möglich, in Abhängigkeit von dem gewünschten Anwendungsgebiet und insbesondere in Abhängigkeit von den aktuellen Umweltbedingungen in einfacher Weise die Zusammensetzung des Gleitmittels bedarfsgemäß auszuwählen.

Ein weiterer Vorteil der erfindungsgemäßen Gleitmittel besteht ferner darin, dass es durch die pulverförmige Konfektionierung möglich ist, in einfacher Weise Gleitmittel bereit zu stellen, die Verbindungen auf Kohlenwasserstoff-basis, die so genannten Basiswachse, und Fluorpolymere, die im Folgenden auch als Fluorwachse bezeichnet werden, enthalten. Durch das in dem Gemisch enthaltene Fließmittel ist es möglich, sehr homogene Gemische aus den Basiswachsen und Fluorwachsen zu bilden, wobei die Homogenität bei der Aufbewahrung und Handhabung der Pulver nicht oder nicht wesentlich beeinträchtigt wird. Insbesondere ist es möglich, Gemische aus herkömmlichen Basiswachsen auf Kohlenwasserstoffbasis und Fluorpolymeren zu bilden, die nicht miteinander kompatibel sind.

### Wachsverbindung (1)

Das oben beschriebene Gleitmittel enthält demnach eine Verbindung auf Kohlenwasserstoff-Basis oder deren Gemische, ein Fluorpolymer oder deren Gemische oder ein Gemisch aus einer oder mehreren Verbindungen auf Kohlenwasserstoff Basis und einem oder mehreren Fluorpolymeren.

### Verbindung auf Kohlenwasserstoff-Basis (1a)

Unter dem Begriff Verbindung auf Kohlenwasserstoff-Basis sind gemäß der vorliegenden Erfindung alle bei einer Temperatur größer 30 °C festen Verbindungen und vorzugsweise Wachse oder wachsähnlichen Verbindungen einzeln oder in Form von geeignet gebildeten Gemischen zu verstehen, die aus Kohlenstoffatomen und Wasserstoffatomen aufgebaut sind und gegebenenfalls Sauerstoffatome, Stickstoffatome und/oder Siliciumatome enthalten können.

Als Beispiele können alle Wachse, Harze, Fette und hydrierten Öle angegeben werden, die in Gleitmitteln für Wintersportgeräte, wie Skiwachsen, des Standes der Technik gewöhnlich eingesetzt werden.

Zu nennen sind insbesondere die Mineralwachse, die chemisch modifizierten Wachse und die synthetischen Wachse sowie die pflanzlichen und tierischen Wachse.

Es können insbesondere die Paraffine, Isoparaffine, mikrokristalline Wachse, Ceresin oder Ozokerit angegeben werden.

Im Rahmen der vorliegenden Erfindung werden lineare Kohlenwasserstoffwachse (n-Paraffine) bevorzugt. Ihr Schmelzpunkt liegt vorteilhaft über 35 °C, beispielsweise über 45 °C und vorzugsweise über 60 °C.

Es kommen auch synthetische und/oder chemisch modifizierte Wachse, beispielsweise bei der Polymerisation oder Copolymerisation von Ethylen gebildete Polymere und deren Gemische, Polypropylenwachse, Polyethylenglycolwachse, durch Fischer-Tropsch-Synthese hergestellte Wachse, Montanwachs, hydrierte Öle, wie Jojobawachs, Siliconwachse, beispielsweise Alkyl-oder Alkoxydimethicone mit Alkyl- oder Alkoxyketten mit 10 bis 45 Kohlenstoffatomen, Ester von bei 40° C festem Poly(di)methylsiloxan, deren Esterkette mindestens 10 Kohlenstoffatome aufweist; und deren Gemische in Betracht.

Als Beispiele sind auch bei Raumtemperatur feste Fettsäuren, wie Palmitinsäure und Stearinsäure, Fettsäureester, wie Octacosanylstearat, Glyceride, Fettether und insbesondere Fettalkoholalkylether Ri-O-R₂, bei denen die Gruppen R₁ und R₂ jeweils unabhängig voneinander unter den Alkylgruppen mit 6 bis 30 Kohlenstoffatomen ausgewählt sind, und Fettalkohole mit 12 bis 32 Kohlenstoffatomen zu nennen, wie Stearylalkohol, Behenylalkohol, und Melissylalkohol, wobei die oben angegebenen Verbindungen linear oder verzweigt, gesättigt oder ungesättigt vorliegen können.

Die pflanzlichen und tierischen Wachse sind vorzugsweise unter Bienenwachs, Wollwachs, Carnaubawachs, Candelillawachs, Ouricurywachs, Japanwachs, Korkfaserwachs, Zuckerrohrwachs, Baumwollwachs und Reiswachs ausgewählt.

Nach einer bevorzugten Ausführungsform ist in dem oben genannten Gleitmittel mindestens ein Wachs und insbesondere ein Wachs enthalten, das unter den Paraffinen, Isoparaffinen, mikrokristallinen Wachsen, Polyethylenwachsen, Polypropylenwachsen, durch Fischer-Tropsch-Synthese hergestellten Wachsen, hydrierten Ölen und Fettalkoholalkylethern, Siliconwachsen, Bienenwachs und Carnaubawachs ausgewählt ist.. Ganz besonders bevorzugt werden Paraffinwachse, Polyethylenwachse, alkylmodifizierte Polymethylsiloxane und deren Gemische.

### Fluorpolymere (1 b)

Die Fluorpolymere können unter den Polymeren, Copolymeren und Pfropfpolymeren ausgewählt sein, die als Teil der Polymerkette und/oder an einer direkt an die Polymerkette gebundenen Seitengruppe eine perfluorierte Sequenz enthalten.

Bei den Fluorpolymeren handelt es sich um Polymere, bei denen in der Polymerkette und/oder in gegebenenfalls an die Polymerkette gebundenen Seitenketten die Wasserstoffatome ganz oder teilweise durch Fluoratome ersetzt sind. Unter dem Begriff "Fluorpolymer" oder "Fluorwachs, wie er gemäß der vorliegenden Erfindung verwendet wird, sind also nicht nur perfluorierte Polymere zu verstehen, bei denen alle enthaltenen Wasserstoffatome durch Fluoratome ersetzt sind, sondern auch Polymere, die in ihrer Struktur perfluorierte Einheiten aufweisen.

Fluorpolymere sind im Stand der Technik bereits als Stoffe, die die Gleiteigenschaften von Wintersportgeräten verbessern können, beschrieben worden. Sie werden entweder als solche in Pulverform auf die Gleitfläche oder auf ein Basiswachs aufgetragen oder in Form von Blöcken auch im Gemisch mit Paraffinwachsen eingesetzt.

Von den Fluorpolymeren kommen daher sowohl die perfluorierten Verbindungen RF als auch die teilfluorierten Verbindungen RF·RH in Betracht, die aus perfluorierten Gruppierungen RF und Alkyl- bzw. Alkenylgruppen RH aufgebaut sind. Die Fluorpolymere können gegebenenfalls auch Sauerstoffatome, Stickstoffatome, Schwefelatome und Siliciumatome in der Form der folgenden Gruppen enthalten: Ether, Thioether, Hydroxy, Amid, Ester, Silan, Siloxan und/oder Urethan.

### 1. Perfluorierte Verbindungen

Es können die Fluorderivate von Kohlenwasserstoffen genant werden, die vollständig fluoriert, d. h. wasserstofffrei sind und gewöhnlich als Fluorkohlenstoffe bezeichnet werden. Beispiele für solche Fluorkohlenstoffe sind etwa Polyvinylidenfluoride, Polyvinylfluorid, Polytetrafluorethylenverbindungen oder Perfluorpolyether.

Von den Perfluorpolyethern können beispielsweise die in der Patentanmeldung DE 10317198 angegebenen Verbindungen RF-O-RF angegeben werden, wobei RF einen perfluorierten Rest der Formel F(CF₂)ₙ- mit n = 1-20 bedeutet.

Längerkettige Perfluoralkane werden beispielsweise in der Patentanmeldung EP 0 132 879 in Kombination mit Paraffinwachsen als Gleitmittel eingesetzt. Diese Perfluoralkane weisen eine im Wesentlichen lineare Kohlenstoffkette auf und enthalten 10 bis 20 Kohlenstoffatome.

### 2. Teilfluorierte Verbindungen

Wie oben angegeben wurde, können die Fluorpolymere auch teilfluorierte Fluorpolymere bedeuten, bei denen nur ein Teil der Wasserstoffatome durch Fluoratome ersetzt ist.

Als Beispiel können die Blockpolymere angegeben werden, die einen perfluorierten Block RF und einen Kohlenwasserstoffblock RH enthalten und insgesamt wenigstens 18 und vorzugsweise 20 bis 40 Kohlenstoffatome enthalten.

In der Patentanmeldung EP 0 444 752 wurden z.B. fluorierte Zweiblockpolymere der allgemeinen Formel F(CF₂)ₙ-(CH₂)ₘH mit n = 2-22, m = 4-26 und n+m ≥ 18 als Skiwachs beschrieben.

Von den teilfluorierten Polymeren können auch die in der Druckschrift DE 4139765 beschriebenen Polymere mit ethylenischer Doppelbindung angegeben werden, die ggf. auch eine Etherbindung enthalten können. Diese teilfluorierten Verbindungen weisen die Formel F(CF₂)n-O_{b}-CH=CH₂ mit n = 2-16 und b = 0 oder 1 auf.

Es sind auch die Alkohole und Ester zu nennen, die Polyfluoralkylgruppen enthalten, sowie die teilfluorierten Polyacrylate. Solche perfluorierten Verbindungen für die Verbesserung von Gleiteigenschaften von Skiern wurden in der Patentanmeldung EP 0 421 303 beschrieben. Sie weisen die folgenden allgemeinen Formeln auf:

RF·R₁·OH (I)

wobei RF eine Polyfluoralkylgruppe mit 4 bis 20 Kohlenstoffatomen bedeutet und R₁ eine Kohlenwasserstoffgruppe mit 1 bis 10 Kohlenstoffatomen ist,

R₂COOR₆R₃ (II)

wobei mindestens eine der Gruppen R₂ und R₃ eine Polyfluoralkylgruppe mit 4 bis 20 Kohlenstoffatomen ist und die andere Gruppe gegebenenfalls eine einwertige Kohlenwasserstoffgruppe mit 1 bis 20 Kohlenstoffatomen bedeutet, wobei R₆ nicht vorhanden ist oder eine zweiwertige Kohlenwasserstoffgruppe mit 1 bis 20 Kohlenstoffatomen bedeutet;

CH=CR4·COO·R₅·RF (III)

wobei RF eine Polyfluoralkylgruppe mit 4 bis 20 Kohlenstoffatomen ist, R₄ Wasserstoff oder Methyl bedeutet und R₅ eine zweiwertige Kohlenwasserstoffgruppe mit 1 bis 10 Kohlenstoffatomen ist.

Es können ferner die mit fluorierten Alkylgruppen modifizierten Siliconpolymere angegeben werden, die in der Patentanmeldung EP 1 778 810 beschrieben wurden.

Bevorzugte Fluorpolymere sind die Perfluoralkane, die einen Schmelzpunkt im Bereich von 25 bis 200 °C und vorzugsweise 30 bis 160 °C aufweisen, sowie die in der Patentanmeldung EP 0 444 752 beschriebenen Blockcopolymere RF·RH, die aus einem Kohlenwasserstoffblock und einem perfluorierten Block bestehen.

### Fließmittel (2)

Unter einem Fließmittel sind im Sinne der vorliegenden Beschreibung Hilfsstoffe zu verstehen, die das Verklumpen oder Zusammenbacken der pulverförmig oder granuliert vorliegenden Bestandteile des Gleitmittels verhindern und so dauerhaft ein freies Fließen (Fluidifikation) gewährleisten können.

Als Beispiele für Fließmittel können angegeben werden: Kieselsäuren, Calciumphosphat, Calciumsilicate, Aluminiumoxid, Magnesiumoxid, Magnesiumcarbonat, Magnesiumhydrogencarbonat, Hydroxyapatit, Zinkoxid, Metallseifen (Metallsalze von Fettsäuren), Talk, Glimmer, Saccharide und deren Gemische.

Bei den Kieselsäuren kann es sich um naßchemisch (Fällungskieselsäuren) oder durch pyrogene Verfahren hergestellte Kieselsäuren (pyrogene Kieselsäuren) handeln. Bevorzugt werden die pyrogenen Kieselsäuren verwendet, insbesondere Kieselsäuren, die durch chemische Nachbehandlung, wie Funktionalisierung mit hydrophoben Gruppen, beispielsweise Silanen, Silazanen und Siloxanen, hydrophobiert wurden.

Von den Metallseifen kommen die Metallsalze in Betracht, die von organischen Carbonsäuren mit 8 bis 22 Kohlenstoffatomen und vorzugsweise 12 bis 18 Kohlenstoffatomen abgeleitet sind, wie beispielsweise Zinkstearat, Magnesiumstearat oder Lithiumstearat, Zinklaurat und Magnesiummyristat.

Bevorzugte Fließmittel sind Fällungskieselsäuren, pyrogene Kieselsäuren, Calciumsilicate, Talk, Metallseifen und Saccharide sowie deren Gemische. Besonders bevorzugt werden pyrogene Kieselsäuren, Calciumsilicate, Talk und Saccharide und deren Gemische.

Nach einer ganz besonders bevorzugten Ausführungsform sind die Fließmittel unter den pyrogenen Kieselsäuren ausgewählt, die durch chemische Nachbehandlung hydrophobiert wurden.

### Zusatzstoffe

Die Gleitmittelzusammensetzungen können natürlich je nach Bedarf und Einsatzzweck weitere, für herkömmliche Gleitmittel übliche Zusatzstoffe enthalten. Es können beispielsweise Farbstoffe, Pigmente, Füllstoffe, Stabilisatoren, UV-Filter, Antioxidantien, Silicone, Graphit, Molybdänsulfid, Bornitrid und dergleichen enthalten sein.

### Mengenanteile

Die pulverförmige Wachskomponente ist in dem fertigen Gleitmittel in einer Konzentration im Bereich von 85 bis 99,9 Gew.-%, vorzugsweise 90 bis 99,8 Gew.-% und noch bevorzugter 95 bis 99,7 Gew.-%, bezogen auf das Gesamtgewicht des fertigen Gleitmittels, enthalten.

Das Fließmittel ist in dem fertigen Gleitmittel in einer Konzentration im Bereich von 0,05 bis 5 Gew.-%, vorzugsweise 0,1 bis 3 Gew.-% und noch bevorzugter 0,25 bis 1 Gew.-%, bezogen auf das Gesamtgewicht des fertigen Gleitmittels, enthalten.

Wenn Zusatzstoffe in dem Gleitmittel enthalten sind, liegt ihr Mengenanteil insgesamt vorzugsweise nicht über 3 Gew.-% und besonders bevorzugt nicht über 2 Gew.-%.

### Pulver

Unter einem pulverförmigen Gleitmittel ist zu verstehen, dass die oben angegebenen Komponente(n) (1), die den überwiegenden Anteil des Gleitmittels ausmachen, in dem fertigen Produkt in Form eines Pulvers oder Granulats mit Korngrößen im Bereich von 100 nm bis 3 mm enthalten sind. Ihre Korngrößen liegen insbesondere im Bereich von 1 µm bis 1 mm, vorzugsweise im Bereich von 10 bis 500 µm und besonders im Bereich von 200 bis 300 µm.

Für die Homogenität des gebildeten Gemisches ist es vorteilhaft, wenn die Korngrößen der enthaltenen Komponenten (1) und (2) nicht zu stark, d.h. nicht mehr als zwei und insbesondere nicht mehr als eine Zehnerpotenz, voneinander abweichen, so dass es sich als günstig erwiesen hat, die Partikelgrößen entsprechend zu wählen oder einzustellen.

Nach einer vorteilhaften Ausführungsform liegt die Partikelgröße des pulverförmigen Fließmittels (2) um mindestens eine Zehnerpotenz und vorzugsweise mindestens zwei Zehnerpotenzen unter der Partikelgröße der Komponente auf Kohlenwasserstoff Basis (1) und des Fluorpolymers (2) im Bereich von 5 nm bis 100 µm und insbesondere 10 nm bis 10 µm.

Die Pulver können gebildet werden, indem die Komponenten einzeln oder in Form von Gemischen, die zwei oder mehr der Komponenten des fertigen Gleitmittels enthalten, zerkleinert werden. Umgekehrt ist es auch möglich, die gewünschte Partikelgröße durch Granulieren wie Sprühgranulieren zu bilden.

Einige der oben genannten Komponenten (1) und (2) sind als Pulver im Handel erhältlich und können grundsätzlich als solche in die Gleitmittelzusammensetzung eingebracht werden.

Zerkleinerungs- und Granulierverfahren sind dem Fachmann bekannt und er kann sie auf der Basis seines Fachwissens in Abhängigkeit von den enthaltenen Komponenten und der gewünschten Korngröße in geeigneter Weise auswählen.

Es können beispielsweise die folgenden Verfahren angegeben werden: Mahlen in Mühlen wie Kugelmühlen, Prallmühlen, Hammermühlen, Stiftmühlen und Strahlmühlen.

Nach einer bevorzugten Ausführungsform erfolgt die Zerkleinerung durch Kalt- oder Gefriermahlung, d.h. das Mahlgut wird mit einem Kühlmittel auf eine Temperatur unter etwa 5-10 °C und insbesondere mit einem Kühlmittel wie flüssigem Stickstoff oder Trockeneis auf eine in der Kryotechnik angewandte Temperatur gekühlt, um ein "Verschmieren" der Komponenten und insbesondere Komponenten mit einem Schmelzpunkt unter 60 °C durch die beim Zerkleinern in das System eingebrachte Energie zu vermeiden.

Eine oder mehrere Komponenten können beispielsweise gemeinsam in einer Kryomühle auf die geeignete Partikelgröße zerkleinert werden. Es können beispielsweise die Kryomühlen Certiprep der Firma Spex genannt werden.

Die enthaltenen Komponenten (1) und (2) werden nach einer Ausführungsform getrennt voneinander auf die gewünschte Korngröße gebracht und anschließend nach bekannten Verfahren miteinander vermischt.

Nach einer weiteren Ausführungsform werden das zumindest eine Fluorpolymer (1b) und das zumindest eine Fließmittel (2) gemeinsam auf die gewünschte Partikelgröße gebracht, beispielsweise durch Sprühgranulierung, und anschließend mit zumindest einer pulverförmigen Komponente auf Kohlenwasserstoffbasis (1a) vermischt.

Es ist nach einer Ausführungsform ferner auch möglich, zwei oder mehr Komponenten unter Rühren auf eine Temperatur über der Schmelztemperatur des höchstschmelzenden Bestandteils des Gemisches zu erwärmen, abkühlen zu lassen und anschließend das fertige Gemisch in die Pulverform zu überführen.

Durch das gemeinsame Vermahlen der Bestandteile ist die Korngrößenverteilung der enthaltenen Komponenten in etwa gleich, wodurch die Homogenität des gebildeten Gemisches noch größer ist.

Die Komponente(n) auf Kohlenwasserstoff-Basis (1a), das oder die Fluorpolymere (1b) und das Fließmittel (2) können jeweils getrennt voneinander in der gewünschten Partikelform aufbewahrt werden und erst bei der Anwendung, d.h. dem Aufbringen des Gleitmittels auf die Gleitfläche des Wintersportgeräts, bedarfgemäß ausgewählt und vermischt werden.

Nach einen anderen vorteilhaften Ausführungsform werden die Komponente(n) auf Kohlenwasserstoff-Basis (1a) jeweils getrennt voneinander und das oder die Fluorpolymere (1b) jeweils getrennt voneinander, aber gemeinsam mit dem Fließmittel (2) konfektioniert. Bei der Anwendung werden die Komponenten bedarfgemäß ausgewählt und miteinander vermischt.

Die beiden zuletzt genannten Ausführungsformen haben den Vorteil, dass in Abhängigkeit von dem jeweiligen Benutzer, wie einem ambitionierten Amateur oder einem Rennläufer, und den aktuellen Schnee-, Temperatur- und Wetterbedingungen vom Benutzer eine oder mehrere der Komponenten (1a) und eine oder mehrere der Komponenten (1b) in der jeweils gewünschten Menge ausgewählt und mit Hilfe des Fließmittel (2), das gegebenenfalls bereits in dem Fluorpulver (1b) enthalten ist, in beliebigen Mischungsverhältnissen zu einem homogenen, frei fließenden Gemisch verarbeitet werden können, wonach das erhaltene Gemisch auf die Gleitfläche des Wintersportgeräts aufgebracht wird.

Besonders vorteilhaft ist es, ein oder mehrere Basiswachse (1a) mit einem Fluorpolymer (1b) und einem Fließmittel (2) zu vermischen. Die Gemischbildung kann mit bekannten Methoden erfolgen, wie einfaches Verrühren mit der Hand, mit Hilfe von gängigen Mischern, und dergleichen.

Nach einem weiteren Aspekt bezieht sich die Erfindung daher auf eine Vorrichtung mit mehreren Abteilungen oder "Kit", die mindestens eine oder mehrere erste Abteilungen I, die eine Komponente auf Kohlenwasserstoffbasis oder ein Gemisch von Komponenten auf Kohlenwasserstoffbasis enthalten, eine oder mehrere zweite Abteilungen II, die jeweils ein Fluorpolymer oder ein Gemisch von Fluorpolymeren 2) aufweisen und mindestens eine oder eine Gruppe von Abteilungen III umfasst, die jeweils ein Fließmittel 3) oder ein Gemisch von Fließmitteln 3) enthalten

Ein weiterer Aspekt der Erfindung ist ein Verfahren zur Beschichtung eines Wintersportgeräts, das die Schritte des Aufbringens mindestens eines wie oben definierten Gleitmittels auf die Gleitfläche eines Sportgeräts und gegebenenfalls eine thermische und/oder mechanische Nachbehandlung der gebildeten Beschichtung umfasst.

Als Beispiele für Wintersportgeräte können Ski, Langlaufski, Snowboards, Schlitten und Skibobs genannt werden.

Die oben angegebenen pulverförmigen Gleitmittel werden gewöhnlich als solche auf die zu behandelnde Gleitfläche, wie beispielsweise auf den nicht vorbehandelten Belag eines Skis in der gewünschten Menge aufgebracht und anschließend mit einem Bügeleisen und/oder Korkblock nachbehandelt.

Es ist jedoch auch möglich, die Verbindungen der Formel (I) oder ihre Gemische auf eine vorbehandelte Gleitfläche aufzutragen, wie beispielsweise auf einen mit einem herkömmlichen Gleitwachs vorbehandelten Belag eines Wintersportgeräts.

Das erfindungsgemäße Verfahren umfasst vorzugsweise einen vorbereitenden Schritt, der darin besteht, die in dem Gleitmittel enthaltenen eine oder mehrere Verbindungen auf Kohlenwasserstoffbasis 1), ein oder mehrere Fluorpolymere 2) und ein oder mehrere Fließmittel 3) getrennt voneinander aufzubewahren und bei der Anwendung vor dem Aufbringen auf die zu beschichtende Gleitfläche bedarfsgemäß in der gewünschten Menge zu vermischen.

Weitere Merkmale der Erfindung ergeben sich aus der folgenden Beschreibung von Ausführungsbeispielen in Verbindung mit den Ansprüchen. Die einzelnen Merkmale können bei einer Ausführungsform gemäß der Erfindung je für sich oder zu mehreren verwirklicht sein.

### Beispiel 1

Es wurden zum Vergleich zwei Gleitmittelzusammensetzungen hergestellt, eine erfindungsgemäßes Gleitmittel 1, das ein Gemisch aus verschiedenen Komponenten auf Paraffinbasis, 5,6 % Perfluoralkan-Blockcopolymer RF-RH und als Fließmittel 0,5 % Kieselsäure enthält und das in der Form eines Pulvers mit einer Korngröße von 200 µm vorliegt, und ein als Vergleich dienendes Gleitmittel 2 gleicher Zusammensetzung, das jedoch als Block vorliegt.

Die Vorgehensweise bei der Herstellung ist die folgende: Für die erfindungsgemäße pulverförmige Zusammensetzung werden die Wachskomponenten unter Rühren auf 120 °C erwärmt, in geeignete Formen gegossen, abgekühlt und in einer Schlagrotormühle bei Kryotemperatur auf eine Korngröße von 200 µm zerkleinert. In dieses Gemisch wird unter Rühren bei Raumtemperatur das Fließmittel mit einer Partikelgröße von 15 µm eingebracht.

Für die Vergleichzusammensetzung 2 werden die Wachskomponenten und die als Fließmittel eingesetzte Kieselsäure unter Rühren auf 120 °C erwärmt, in Blockform gegossen und abgekühlt .

Für die Beurteilung der Gleiteigenschaften wurden identische Ski mit einem Basiswachs aus verschiedenen Paraffinwachsen vorbehandelt, worauf jeweils erfindungsgemäße Gleitmittelzusammensetzung in Pulverform 1 und die als Vergleich dienende Zusammensetzung in Blockform 2 auf die Lauffläche der Ski aufgetragen und mit Hilfe eines Korkblocks mechanisch nachbehandelt wurden.

Pro Skipaar wurden jeweils drei Testfahrten von demselben Skifahrer unter den folgenden Bedingungen durchgeführt:

| | |
|---|---|
| Wetter: | sonnig |
| Lufttemperatur: | 12,8 °C |
| Schneetemperatur: | 0 °C |
| Luftfeuchtigkeit: | 47% |
| Schneeart: | Altschnee - grob |

Das Ergebnis ist in der folgenden Tabelle zusammengefasst, wobei aus den ermittelten Werten jeweils der Mittelwert gebildet wurde.

| | Mittelwert (in Sekunden) |
|---|---|
| Gleitmittelpulver 1 | 20,81 |
| Vergleichszusammensetzung in Blockform 2 | 21,24 |

Die mit dem erfindungsgemäßen Pulver 1 gewachsten Skier waren also mehr als 4 zehntel Sekunden schneller.

### Beispiel 2

Die folgenden Gleitmittelzusammensetzungen in Pulverform wurden hergestellt, indem die folgenden Komponenten unter Homogenisieren mit einem Rührwerk auf eine Temperatur von 120 °C erwärmt, abgekühlt und in einer Kryomühle auf eine Korngröße von etwa 300 µm zerkleinert wurden, wobei die Mengenanteile in Gewichtsprozent, bezogen auf das Gleitmittel, angegeben sind.

| | Gleitmittel 1 | Gleitmittel 2 | Gleitmittel 3 |
|---|---|---|---|
| Paraffinwachs | 79,7 | 79,7 | 79,7 |
| Synthetisches Hartwachs | 10 | 10 | 10 |
| Perfluoralkan-Blockcopolymer RF-RH | 10 | - | 2,5 |
| Perfluoralkan RF | - | 10 | 7,5 |
| Hydrophobe pyrogene Kieselsäu-re | 0,3 | 0,3 | 0,3 |

### Beispiel 3

Dieses Beispiel zeigt die Verbesserung der Gleiteigenschaften, die mit den Gleitmitteln gemäß der vorliegenden Erfindung im Vergleich mit einem Gleitmittel des Standes der Technik erzielt werden kann.

Identische Ski wurden mit einem Basiswachs aus verschiedenen Paraffinwachsen vorbehandelt, worauf jeweils die in Beispiel 2 aufgeführten Gleitmittelzusammensetzung in Pulverform 1, 2 oder 3 und eine als Vergleich dienende Zusammensetzung des Standes der Technik in Blockform auf die Lauffläche der Ski aufgetragen und mit Hilfe eines Korkblocks mechanisch nachbehandelt wurden.

Pro Skipaar wurden jeweils vier Testfahrten von demselben Skifahrer unter den folgenden Bedingungen durchgeführt:

| | |
|---|---|
| Wetter: | heiter |
| | |
| Lufttemperatur: | 5,5 °C |
| | |
| Schneetemperatur: | -0,2 °C |
| | |
| Luftfeuchtigkeit: | 74 % |
| | |
| Schneeart: | Altschnee - grob |

Bei der Vergleichszusammensetzung handelt es sich um ein als Block vorliegendes Gemisch aus verschiedenen Komponenten auf Paraffinbasis, das 5,6 % Perfluoralkan-Blockcopolymer RF-RH enthält.

Das Ergebnis ist in der folgenden Tabelle zusammengefasst, wobei aus den ermittelten Werten jeweils der Mittelwert gebildet wurde.

| | Mittelwert (in Sekunden) |
|---|---|
| Gleitmittelpulver 1 | 11,49 |
| Gleitmittelpulver 2 | 11,51 |
| Gleitmittelpulver 3 | 11,54 |
| Gleitmittel in Blockform | 11,58 |

Die mit der Testmischung 1, 2 oder 3 gewachsten Skier waren um mindestens 5 hundertstel Sekunden schneller.

## Patentansprüche

1. Pulverförmiges Gleitmittel für Wintersportgeräte umfassend
(1) mindestens eine pulverförmige Komponente, die ausgewählt ist unter:
(1a) einer oder mehreren Komponenten auf Kohlenwasserstoff-Basis und/oder
(1b) einem oder mehreren Fluorpolymeren und
(2) mindestens ein Fließmittel.

2. Pulverförmiges Gleitmittel nach Anspruch 1, das zumindest zwei pulverförmige Wachskomponenten (1) umfasst.

3. Pulverförmiges Gleitmittel nach Anspruch 1 oder 2, das zumindest eine Wachskomponente auf Kohlenwasserstoff-Basis (1a) und zumindest ein Fluorpolymer (1b) umfasst..

4. Pulverförmiges Gleitmittel nach einem der vorhergehenden Ansprüche, wobei die Komponente auf Kohlenwasserstoffbasis (1a) ausgewählt ist unter: Paraffinen, Isoparaffinen, mikrokristallinen Wachsen, Ceresin, Ozokerit, Polyethylenwachsen, Polypropylenwachsen, Polyethylenglycolwachsen, durch Fischer-Tropsch-Synthese hergestellten Wachsen, Montanwachs, hydrierten Ölen, Siliconwachsen, Fettsäuren, Fettsäureestern, Glyceriden, Fettalkoholen, Fettalkoholalkylethern, Siliconwachsen, pflanzlichen und tierischen Wachsen und deren Gemischen.

5. Pulverförmiges Gleitmittel nach Anspruch 1 oder 2, wobei die Komponente auf Kohlenwasserstoffbasis (1a) unter den Paraffinen, Isoparaffinen, mikrokristallinen Wachsen, Polyethylenwachsen, Polypropylenwachsen, durch Fischer-Tropsch-Synthese hergestellten Wachsen, hydrierten Ölen, Fettalkoholalkylethern, Siliconwachsen, Bienenwachs und Carnaubawachs ausgewählt ist.

6. Pulverförmiges Gleitmittel nach einem der vorhergehenden Ansprüche, wobei das Fluorpolymer (1b) unter den Polymeren, Copolymeren und Pfropfpolymeren ausgewählt ist, die als Teil der Polymerkette und/oder an einer direkt an die Polymerkette gebundenen Seitengruppe eine perfluorierte Sequenz enthalten.

7. Pulverförmiges Gleitmittel nach einem der vorhergehenden Ansprüche, wobei das Fluorpolymer (1b) unter den bei Raumtemperatur festen Perfluorkohlenstoffen RF und den Copolymeren ausgewählt ist, die aus perfluorierten Sequenzen RF und Alkyl- bzw. Alkenylgruppen RH aufgebaut sind und gegebenenfalls Sauerstoffatome, Stickstoffatome, Schwefelatome und Siliciumatome in der Form der folgenden Gruppen enthalten können: Ether, Thioether, Hydroxy, Amid, Ester, Silan, Siloxan und/oder Urethan.

8. Pulverförmiges Gleitmittel nach einem der vorhergehenden Ansprüche, wobei die Fluorpolymere (1b) unter den Perfluoralkanen RF und Blockcopolymeren RF-RH ausgewählt sind.

9. Pulverförmiges Gleitmittel nach einem der vorhergehenden Ansprüche, wobei das Fließmittel (2) unter den Fällungskieselsäuren, pyrogenen Kieselsäuren, Calciumsilicaten, Talk, Metallseifen und Sacchariden sowie deren Gemischen ausgewählt sind.

10. Pulverförmiges Gleitmittel nach Anspruch 9, wobei das Fließmittel (2) unter den Fällungskieselsäuren und pyrogenen Kieselsäuren ausgewählt ist, die durch chemische Nachbehandlung hydrophobiert wurden.

11. Pulverförmiges Gleitmittel nach einem der vorhergehenden Ansprüche, wobei der Mengenanteil des Fließmittels (2) oder der Fließmittel (2) in dem fertigen pulverförmigen Gleitmittel insgesamt im Bereich von 0,05 bis 5 Gew.-%, vorzugsweise 0,1 bis 3 Gew.-% und besonders bevorzugt 0,25 bis 1 Gew.-%, bezogen auf das Gesamtgewicht des fertigen Gleitmittels, liegt.

12. Vorrichtung mit mehreren Abteilungen oder "Kit", die mindestens eine oder mehrere erste Abteilungen I, die eine pulverförmige Komponente (1) oder ein Gemisch von pulverförmigen Komponenten (1) enthalten, und eine oder mehrere zweite Abteilungen II aufweisen, die ein Fließmittel (2) oder ein Gemisch von Fließmitteln (2) enthalten, wie sie in einem der Ansprüche 1 bis 11 definiert sind.

13. Vorrichtung mit mehreren Abteilungen oder "Kit" nach Anspruch 12, die mindestens eine oder mehrere erste Abteilungen IA, die eine Komponente auf Kohlenwasserstoffbasis (1a) oder ein Gemisch von Komponenten auf Kohlenwasserstoffbasis (1a) enthalten, eine oder mehrere zweite Abteilungen IB, die ein Fluorpolymer oder ein Gemisch von Fluorpolymeren (1b) aufweisen und mindestens eine oder eine Gruppe von Abteilungen II umfasst, die ein Fließmittel (2) oder ein Gemisch von Fließmitteln 3) enthalten, wie sie in einem der Ansprüche 1 bis 8 definiert sind.

14. Verfahren zur Beschichtung eines Wintersportgeräts, das die folgenden Schritte umfasst:
a. Auftragen mindestens eines pulverförmigen Gleitmittels, wie es in einem der Ansprüche 1 bis 11 definiert ist, auf die Gleitfläche eines Sportgeräts und insbesondere eines Wintersportgeräts, und
b. anschließend gegebenenfalls thermisches und/oder mechanisches Nachbehandeln der in Schritt (a) gebildeten Beschichtung.

15. Verwendung eines pulverförmigen Gleitmittels, wie es in einem der Ansprüche 1 bis 11 definiert ist, oder einer Vorrichtung, wie sie in Anspruch 12 oder 13 definiert ist, zur Verbesserung der Gleiteigenschaften von Wintersportgeräten.
